# EUROPÄISCHE PATENTSCHRIFT

(11) **EP 3 077 734 B1**
(45) Veröffentlichungstag und Bekanntmachung des Hinweises auf die Patenterteilung: **24.07.2019**
(21) Anmeldenummer: 14831060.0
(22) Anmeldetag: 02.12.2014
(51) Int. Cl.: B23P 15/26, F24F 13/30, F25D 23/00, F24D 19/02

(54) **SYSTEM UND VERFAHREN ZUR BEFESTIGUNG EINES HEIZ- ODER KÜHLKÖRPERS**
SYSTEM AND PROCESS FOR FIXING A HEATING OR COOLING BODY
SYSTÈME ET PROCÉDÉ POUR FIXER UN CORPS CHAUFFANT OU DISSIPATEUR THERMIQUE

(30) Priorität: 02.12.2013 CH 20442013
(43) Veröffentlichungstag der Anmeldung: 12.10.2016
(73) Patentinhaber: Zehnder Group International AG, 5722 Gränichen (CH)
(72) Erfinder: EGGERT, Dominik, CH-8046 Zürich (CH); EVERTZ, Jörg, CH-8903 Birmensdorf (CH); MÜLLER, Martin, CH-8824 Schönenberg (CH); WERNER, Uwe, CH-8825 Hütten (CH); DIETHELM, Roland, CH-8404 Winterthur (CH)
(74) Vertreter: Patentanwälte Bregenzer und Reule Partnerschaftsgesellschaft mbB
(86) Internationale Anmeldenummer: PCT/IB2014/002625
(87) Internationale Veröffentlichungsnummer: WO 2015/082974

(56) Entgegenhaltungen:
- DE-A1- 10 160 217
- DE-U1-202012 006 316
- US-B1- 7 506 851

## Beschreibung

Die Erfindung bezieht sich auf ein System gemäß dem Oberbegriff des Anspruchs 1 und ein Verfahren zur Befestigung eines Heiz- oder Kühlkörpers.

Ein derartiges System ist beispielsweise in DE 20 2012 006 316 U1 erläutert.

Es gibt zahlreiche bekannte Systeme zum Befestigen eines Heiz/Kühl-Körpers an einer Wand oder an einem Boden. Derartige Systeme, die z.B. bei Platten-Heizkörpern verwendet werden, enthalten mindestens zwei Konsolen, die an einer Wand oder an einem Boden befestigt werden können. Die Konsolen haben jeweils eine Längsachse, welche durch ein erstes Konsolenende und ein zweites Konsolenende der jeweiligen Konsole verläuft. Das erste Konsolenende einer solchen Konsole besitzt eine erste Konsolenformation, und das zweite Konsolenende einer solchen Konsole besitzt eine zweite Konsolenformation. Der zu befestigende Heiz/Kühl-Körper besitzt eine erste Kante und eine zu der ersten Kante gegenüberliegende zweite Kante. Die erste Kante hat eine zu der ersten Konsolenformation komplementäre erste Kantenformation, welche mit der ersten Konsolenformation in Eingriff gebracht werden kann. Die zweite Kante hat eine zu der zweiten Konsolenformation komplementäre zweite Kantenformation, welche mit der zweiten Konsolenformation in Eingriff gebracht werden kann. Dadurch lässt sich der Heiz/Kühl-Körper an den beiden zuvor an der Wand oder am Boden befestigten Konsolen befestigen.

Das Montieren eines Heiz/Kühl-Körpers oder Kühlkörpers mit den bekannten Systemen erfordert nach dem Befestigen der Konsolen an der Wand oder am Boden noch zahlreiche Schritte zum Befestigen des Heiz/Kühl-Körpers an den Konsolen. Dies wird von den Monteuren oft als umständlich empfunden.

Der Erfindung liegt die Aufgabe zugrunde, das Montieren eines Heiz- oder Kühlkörpers an einer Wand oder am Boden zu erleichtern. Im folgenden wird anstelle der Formulierung "Heiz- oder Kühlkörper" die Formulierung "Heiz/Kühl-Körper" verwendet, womit gemeint ist, dass sich dieser Körper je nach Temperatur des in ihm geführten Wärmeträgerfluids bezogen auf die Temperatur des ihn umgebenden Raums im Heizbetrieb oder im Kühlbetrieb befindet.

Zur Lösung dieser Aufgabe sieht die Erfindung ein System zur Befestigung eines Heiz/Kühl-Körpers gemäß der technischen Lehre des Anspruchs 1 vor.

Dieses System ermöglicht ein einfaches Verfahren zur Befestigung eines Heiz/KühlKörpers an einer Wand mit den folgenden Schritten:
a) Befestigen mindestens zweier Konsolen an einer Wand oder an einem Boden, wobei die Längsachse jeder Konsole vertikal ausgerichtet wird und die beiden Konsolen in horizontaler Richtung voneinander beabstandet angeordnet werden;
b) In-Eingriff-Bringen der ersten Kantenformation des Heiz/Kühl-Körpers mit der komplementären ersten Konsolenformation der jeweiligen Konsole, so dass ein Schwenkeingriff zwischen dem Heiz/Kühl-Körper und den Konsolen hergestellt wird;
c) Verschwenken des Heiz/Kühl-Körpers bezüglich der beiden Konsolen um eine Schwenkachse, wobei die zweite Kantenformation des Heiz/Kühl-Körpers an die zweite Konsolenformation der jeweiligen Konsole herangeschwenkt wird; und
d) In-Eingriff-Bringen der zweiten Kantenformation des Heiz/Kühl-Körpers mit der komplementären zweiten Konsolenformation der jeweiligen Konsole, so dass ein Rasteingriff zwischen dem Heiz/Kühl-Körper und den Konsolen hergestellt wird, wobei die zweite Konsolenformation einen Fortsatz aufweist und die zweite Kante einen an ihr entlang ihrer Längsrichtung verschiebbar gelagerten Schlitten aufweist, an welchen der Fortsatz eingerastet wird.

Bei einer bevorzugten Ausführung des erfindungsgemässen Systems besitzt die erste Konsolenformation einen Haken und die erste Kante eine Leiste, an welcher der Haken an einer auswählbaren, vorzugsweise beliebigen Stelle entlang der Längsrichtung der Leiste eingehängt und verschwenkt werden kann. Dieser Haken/Leiste-Eingriff zwischen der Konsole und dem Heiz/Kühl-Körper lässt sich leicht herstellen. Dabei können der Haken und die Leiste entweder an der unteren Seite oder an der oberen Seite der Konsole und des Heiz/Kühl-Körpers vorgesehen sein. Unter einer Konsole mit einem Haken soll gemäss der Erfindung auch eine im wesentlichen L-förmige Konsole verstanden werden, bei welcher der eigentliche Haken am äusseren Ende des kurzen L-Schenkels angebracht ist.

Erfindungsgemäß besitzt die zweite Konsolenformation einen Fortsatz und die zweite Kante einen an ihr entlang ihrer Längsrichtung verschiebbar gelagerten Schlitten, an welchem der Fortsatz eingerastet werden kann. Jeweils ein Schlitten korrespondiert mit einer Konsole und kann an einer geeigneten Stelle an der zweiten Kante positioniert werden, welche der Stelle der ersten Kante entspricht, an welcher der Haken der Konsole positioniert eingehängt wurde. Zweckmässigerweise sind ausgewählte Stellen an der ersten Kante und dazu korrespondierende Stellen an der zweiten Kante durch geeignete Markierungen an den beiden Kanten gekennzeichnet. Dies erleichtert die richtige Positionierung der beiden Konsolen mit ihrem Hakenende an der ersten Kante und die dazu korrespondierende richtige Positionierung der beiden Schlitten an der zweiten Kante, wodurch das Einrasten des Fortsatzes der jeweiligen Konsole an dem jeweiligen Schlitten erleichtert wird.

Vorzugsweise hat der Fortsatz einen plattenartigen oder scheibenartigen Einrastbereich, welcher in eine dazu komplementäre Aussparung des Schlittens einführbar und darin einrastbar ist. Dies ermöglicht eine insgesamt flache Bauform des Gesamtsystems Heiz/Kühl-Körper/Konsolen.

Bei einer weiteren bevorzugten Ausführung des erfindungsgemässen Systems ist der Fortsatz an der Konsole stufenlos verstellbar angeordnet. Vorzugsweise ist der Fortsatz mittels einer Schraubverbindung am zweiten Konsolenende angebracht. Dies ermöglicht eine Einstellung des Abstands zwischen dem Heiz/Kühl-Körper und einer jeweiligen Konsole, wodurch sich bei wandmontiertem System der Wandabstand des montierten oder zu montierenden Heiz/Kühl-Körpers einstellen lässt. Die Achse der Schraubverbindung kann orthogonal zur Längsachse oder Längsrichtung der Konsole und orthogonal zur Schwenkachse der Konsole verlaufen.

Die Konsolen des erfindungsgemässen Systems können ein erstes Wand-Befestigungsmittel und ein zweites Wand-Befestigungsmittel aufweisen, die entlang der Längsachse der jeweiligen Konsole voneinander beabstandet angeordnet sind. Diese Art der Konsolen ermöglicht die Befestigung des Heiz/Kühl-Körpers an einer Wand.

Die Konsolen des erfindungsgemässen Systems können ein Wand-Befestigungsmittel an einem Ort ihrer Längsachse und ein Boden-Befestigungsmittel im Bereich ihres ersten Endes aufweisen. Diese Art der Konsolen ermöglicht die Befestigung des Heiz/Kühl-Körpers an einer Wand und am Boden.

Weitere Vorteile Merkmale und Anwendungsmöglichkeiten der Erfindung ergeben sich aus der nun folgenden Beschreibung eines nicht einschränkend aufzufassenden Ausführungsbeispiels der Erfindung anhand der Zeichnung, wobei
- Fig. 1: einen Heiz/Kühl-Körper zeigt, welcher mittels des erfindungsgemässen Systems an einer Wand befestigt werden kann;
- Fig. 2: eine Konsole zeigt, welche einen Bestandteil des erfindungsgemässen Systems bildet;
- Fig. 3: Befestigungsmittel oder Befestigungsmaterial_zeigt, welche mit dem erfindungsgemässen System verwendet werden;
- Fig. 4: eine erste Montagehilfe zeigt, welche mit dem erfindungsgemässen System verwendet wird;
- Fig. 5: einen Ausschnitt eines mittels einer Konsole befestigten Heiz/Kühl-Körpers zeigt;
- Fig. 6: einen vergrösserten Ausschnitt des unteren Bereichs von Fig. 5 in Form einer Schnittansicht zeigt;
- Fig. 7: einen vergrösserten Ausschnitt des oberen Bereichs von Fig. 5 zeigt;
- Fig. 8: einen vergrösserten Ausschnitt des unteren Bereichs von Fig. 5 in Form einer Schnittansicht zeigt;
- Fig. 9: einen Ausschnitt aus dem unteren Bereich von Fig. 5 mit gekipptem Heiz/Kühl-Körper zeigt;
- Fig. 10: den gekippten Heiz/Kühl-Körper von Fig. 9 von oben zeigt;
- Fig. 11: einen Abschnitt des Heiz/Kühl-Körpers in seiner hochgeschwenkten vertikalen Stellung zeigt;
- Fig. 12: den in Fig. 1 gezeigten Heiz/Kühl-Körper mit graphisch hervorgehobenem Vorlauf und Rücklauf zeigt;
- Fig. 13: ein flexibles Verlängerungsrohr bzw. einen Schlauch zeigt, welcher einen Leitungsabschnitt des Vorlaufs und Rücklaufs des Heiz/Kühl-Körpers bildet;
- Fig. 14: ein Bohrbild an einer Wand zeigt;
- Fig. 15: das lose Anbringen der beiden Konsolen mittels der Befestigungsmittel an einer Wand zeigt;
- Fig. 16: das Einstellen eines angestrebten Wandabstandes im unteren Bereich der Konsole in Form einer Schnittansicht zeigt;
- Fig. 17: das Einstellen eines angestrebten Wandabstandes im oberen Bereich der Konsole in Form einer Schnittansicht zeigt;
- Fig. 18: das Einhängen der ersten Montagehilfen im unteren Bereich der Konsolen zeigt;
- Fig. 19: einen vergrösserten Ausschnitt von Fig. 18 in einer Seitenansicht zeigt;
- Fig. 20: das Anschliessen des Rücklaufs mittels eines Verlängerungsrohres zeigt;
- Fig. 21: das Aufsetzen des Heiz/Kühl-Körpers auf eine eingehängte Montagehilfe zeigt;
- Fig. 22: das Verschieben des aufgesetzten Heiz/Kühl-Körpers entlang der Montagehilfe zeigt;
- Fig. 23: das seitliche Ausrichten des Heiz/Kühl-Körpers zeigt;
- Fig. 24: das Einhängen einer zweiten Montagehilfe im oberen Bereich einer der beiden Konsolen zeigt;
- Fig. 25: das Anschliessen des Rücklaufs ohne Verlängerungsrohr zeigt;
- Fig. 26: das Hochschwenken des Heiz/Kühl-Körpers um die Schwenkachse zeigt;
- Fig. 27: einen vergrösserten Ausschnitt des unteren Bereichs des in Fig. 26 gezeigten Heiz/Kühl-Körpers in hochgeschwenkter Stellung in einer Seitenansicht zeigt;
- Fig. 28: den gemäss Fig. 27 hochgeschwenkten Heiz/Kühl-Körper von hinten zeigt, wobei der Heiz/Kühl-Körper im oberen Bereich der Konsolen noch nicht verriegelt ist;
- Fig. 29: einen der beiden Ausschnitte des Heiz/Kühl-Körpers von Fig. 28 vor dem Verriegeln des Heiz/Kühl-Körpers zeigt;
- Fig. 30: den Ausschnitt des Heiz/Kühl-Körpers von Fig. 28 nach dem Verriegeln des Heiz/Kühl-Körpers zeigt;
- Fig. 31: den montierten Heiz/Kühl-Körper vor dem Entfernen der ersten Montagehilfen zeigt;
- Fig. 32: den montierten Heiz/Kühl-Körper nach dem Entfernen der ersten Montagehilfen zeigt;
- Fig. 33: das Herabschwenken des Heiz/Kühl-Körpers um die Schwenkachse und das feste Anbringen der beiden Konsolen mittels der Befestigungsmittel an der Wand zeigt; und
- Fig. 34: das Abziehen der Schutzfolie von dem an der Wand montierten Heiz/Kühl-Körper zeigt.

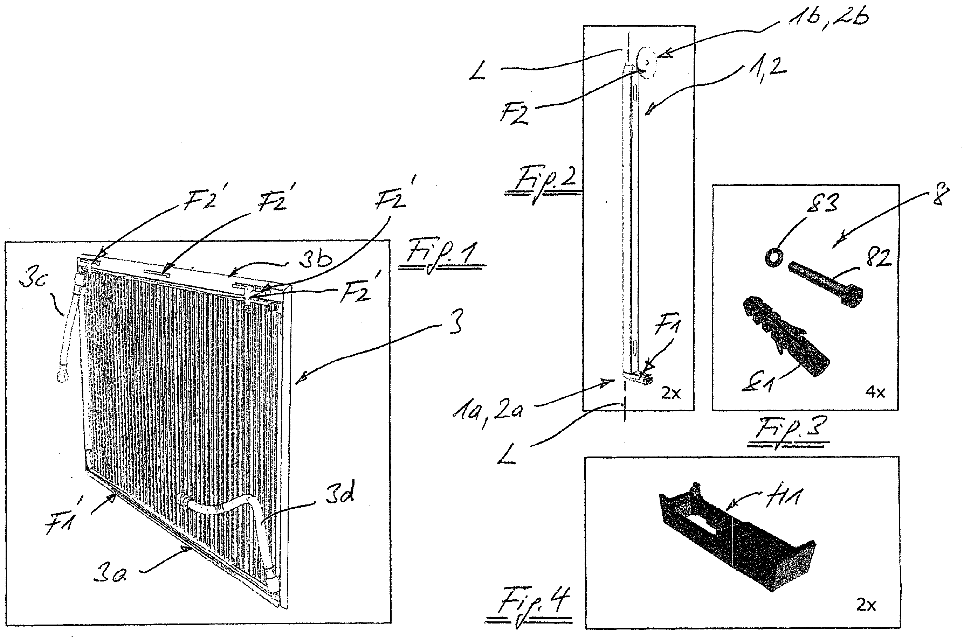

In Fig. 1 ist ein Heiz/Kühl-Körper 3 gezeigt, welcher mittels des erfindungsgemässen Systems an einer Wand befestigt werden kann. Genauer gesagt ist die Rückseite, d.h. die im montierten Zustand der Wand zugewandte Seite des Heiz/Kühl-Körpers 3 gezeigt. Der Heiz/Kühl-Körper 3 hat eine erste Kante 3a und eine dazu gegenüberliegende zweite Kante 3b, welche beide an dem Heiz/Kühl-Körper 3 fest angebracht oder mit diesem einstückig sind. Der Heiz/Kühl-Körper 3 hat ausserdem einen ersten Anschluss, an dem ein erster Schlauch 3c angeschlossen ist, sowie einen zweiten Anschluss, an dem ein zweiter Schlauch 3d angeschlossen ist. Im Bereich der ersten Kante 3a befindet sich eine erste Kantenformation F1', und im Bereich der zweiten Kante 3b befindet sich eine zweite Kantenformation F2'. Im dargestellten Beispiel eines Heiz/Kühl-Körpers 3 hat es im Bereich der ersten Kante 3a eine oder mehrere leistenartige Formationen F1' und im Bereich der zweiten Kante 3b einen oder mehrere rillenartige Formationen F2', die sich jeweils parallel zu den Kanten 3a, 3b erstrecken. Im dargestellten Beispiel ist die untere Formation F1' eine sich über die gesamte Breite des Heiz/Kühl-Körpers 3 erstreckende Leiste, während die obere Formation F2' durch drei über die Breite des Heiz/Kühl-Körpers 3 gleichmässig verteilte Rillen gebildet ist.

In Fig. 2 ist eine Konsole 1 (oder 2) gezeigt, welche einen Bestandteil des erfindungsgemässen Systems bildet. Das System enthält mindestens zwei Konsolen 1, 2 mit jeweils einer Längsachse L, welche durch ein erstes Konsolenende 1a (oder 2a) und ein zweites Konsolenende 1b (oder 2b) der jeweiligen Konsole 1 (oder 2) verläuft. Das erste Konsolenende 1a, 2a hat jeweils eine erste Konsolenformation F1, und das zweite Konsolenende 1b, 2b hat jeweils eine zweite Konsolenformation F2.

Die erste Kante 3a hat eine zu der ersten Konsolenformation F1 komplementäre erste Kantenformation F1', welche mit der ersten Konsolenformation F1 in Eingriff gebracht werden kann. Die zweite Kante 3b hat eine zu der zweiten Konsolenformation F2 komplementäre zweite Kantenformation F2', welche mit der zweiten Konsolenformation F2 in Eingriff gebracht werden kann.

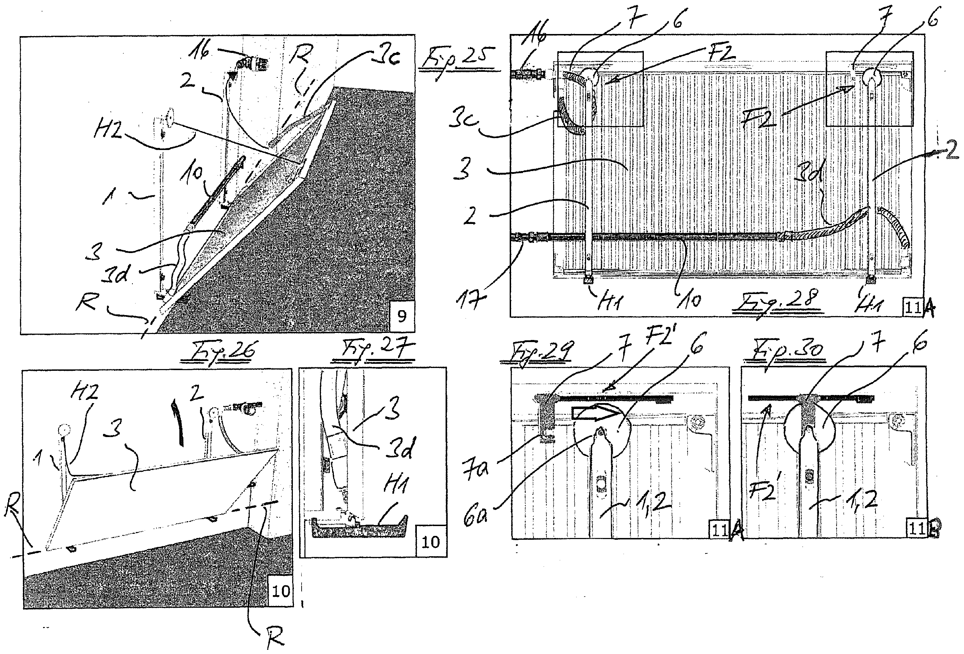

Die erste Konsolenformation F1 kann mit der komplementären ersten Kantenformation F1' des Heiz/Kühl-Körpers 3 in einen Schwenkeingriff gebracht werden, so dass die jeweilige Konsole 1, 2 mit ihrem ersten Konsolenende 1a, 2a bezüglich des Heiz/Kühl-Körpers 3 innerhalb einer zur Hauptebene des Heiz/KühlKörpers 3 orthogonalen Ebene um eine Schwenkachse R (siehe Fig. 25 und Fig. 26) verschwenkbar ist.
Die zweite Konsolenformation F2 kann mit der komplementären zweiten Kantenformation F2' des Heiz/Kühl-Körpers 3 in einen Rasteingriff gebracht werden, so dass die jeweilige Konsole 1, 2 mit ihrem zweiten Konsolenende 1b, 2b an dem Heiz/Kühl-Körper 3 einrastbar ist.

In Fig. 3 sind Befestigungsmittel 8 gezeigt, welche mit dem erfindungsgemässen System verwendet werden. Für jede der beiden Konsolen 1, 2 sind zwei Dübel 81, zwei Schrauben 82 und zwei Unterlegscheiben 83 zur Befestigung der jeweiligen Konsole 1, 2 an einer Wand vorgesehen.

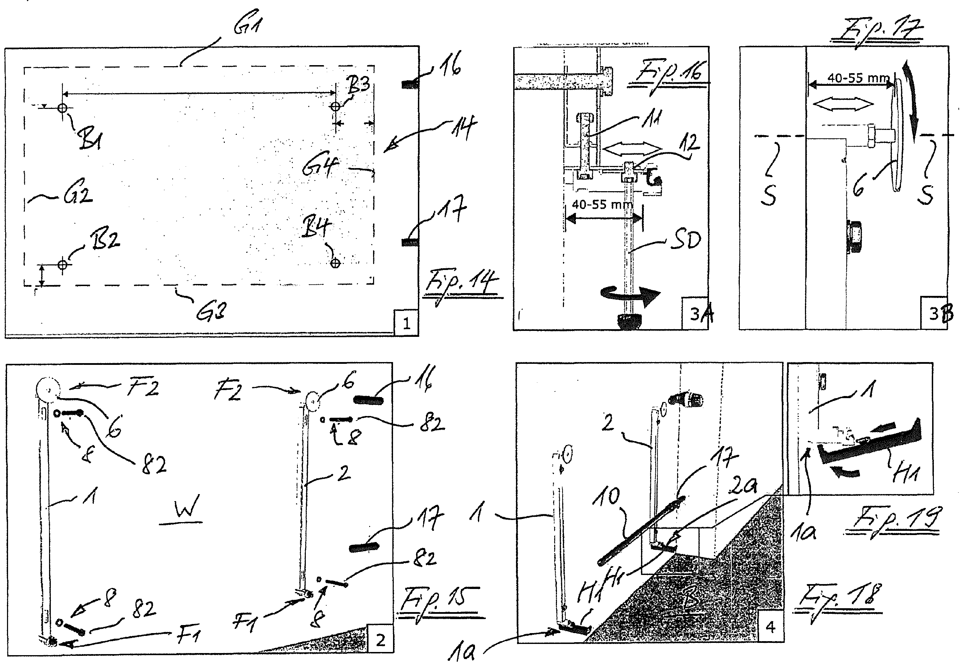

In Fig. 4 ist eine erste Montagehilfe H1 gezeigt, welche mit dem erfindungsgemässen System verwendet wird. Für jeder der beiden Konsolen 1, 2 ist eine derartige erste Montagehilfe H1 vorgesehen (siehe Fig. 18).

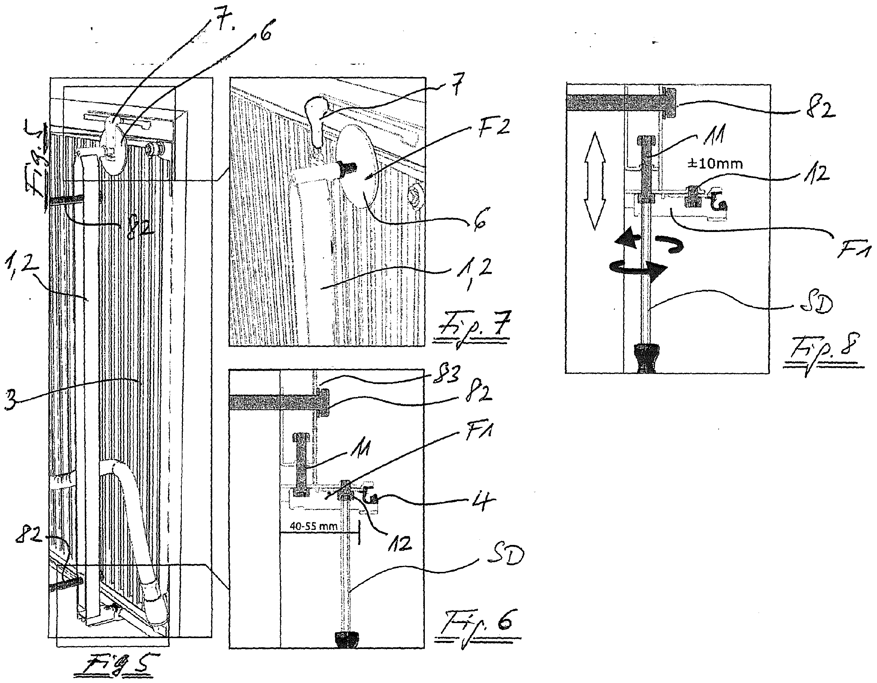

In Fig. 5 ist ein Ausschnitt eines mittels einer Konsole 1, 2 befestigten Heiz/KühlKörpers 3 gezeigt. Ein Wandabstand beträgt oben und unten an den Konsolen 40-55 mm.

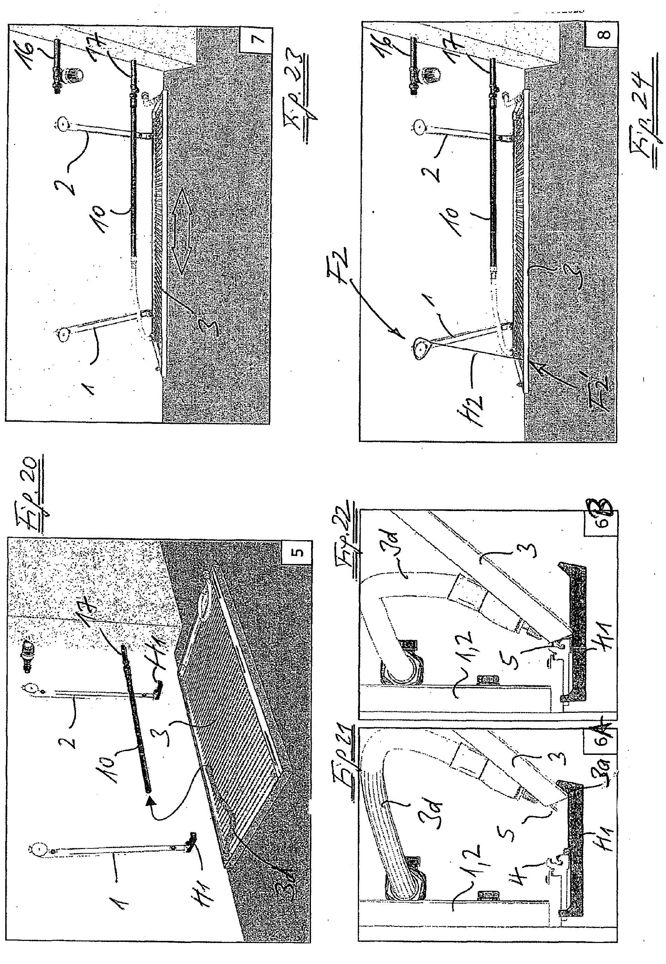

In Fig. 6 ist ein vergrösserter Ausschnitt des unteren Bereichs von Fig. 5 in einer Schnittansicht gezeigt. Man erkennt den unteren Endbereich der Konsole 1, 2. Man erkennt, dass die erste Konsolenformation F1 einen Haken 4 hat. Die erste Kante 3a (siehe Fig. 1) hat eine Leiste 5, an welcher der Haken 4 an einer auswählbaren Stelle entlang der Längsrichtung der Leiste 5 eingehängt und verschwenkt werden kann (siehe Fig. 21, und Fig. 22). Ausserdem erkennt man eine Schraube 82 und eine Unterlegscheibe 83, mittels derer die Konsole 1, 2 an einer Wand befestigt ist. Man erkennt auch eine erste weitere Schraube 11, die zur Höhenverstellung an der Konsole 1, 2 stufenlos verdreht werden kann und zur Höhenverstellung des eingehängten Heiz/Kühl-Körpers 3 dient. Ausserdem erkennt man eine zweite weitere Schraube 12, die zur Wandabstand-Verstellung an der Konsole 1, 2 gelöst und dann wieder festgedreht werden kann. Sie dient zur Wandabstand-Verstellung des eingehängten Heiz/Kühl-Körpers 3. Die Schrauben 11 und 12 haben an ihrem Kopf eine Vertiefung mit Mehrkantprofil und lassen sich mit einem entsprechenden Schraubendreher SD verdrehen. Man erkennt, wie die Schraube 12 zur Einstellung des Wandabstands durch den Schraubendreher SD betätigt wird.

In Fig. 7 ist ein vergrösserter Ausschnitt des oberen Bereichs von Fig. 5 in Form einer Schnittansicht gezeigt. 3. Man erkennt, dass die zweite Konsolenformation F2 einen Fortsatz 6 hat. Die zweite Kante 3b (siehe Fig. 1) hat einen an ihr entlang ihrer Längsrichtung verschiebbar gelagerten Schlitten 7, an welchem der Fortsatz 6 eingerastet werden kann (siehe Fig. 29 und Fig. 30).

In Fig. 8 ist nochmals der vergrösserte Ausschnitt des unteren Bereichs von Fig. 5 in Form einer Schnittansicht zur Darstellung einer Höhenverstellung gezeigt. Man erkennt, wie die Schraube 11 zur Höheneinstellung durch den Schraubendreher SD betätigt wird.

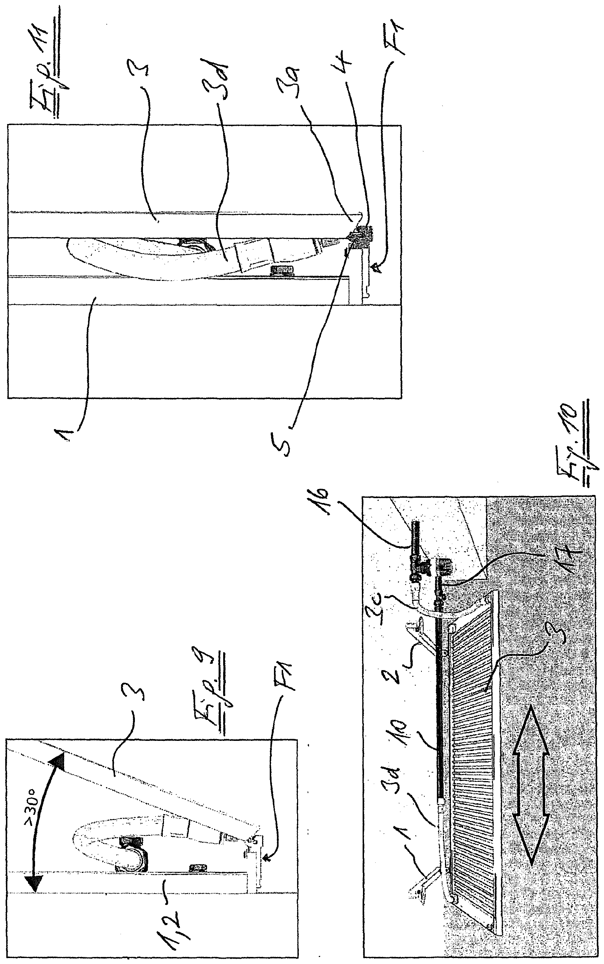

In Fig. 9 zur Darstellung einer Einstellmöglichkeit seitlich ist ein Ausschnitt aus dem unteren Bereich von Fig. 5 mit gekipptem Heiz/Kühl-Körper 3 gezeigt, der sich in einem bezüglich der Konsolen 1, 2 verschwenkten Zustand befindet. Der hier gezeigte Winkel der Verschwenkung der Ebene des Heiz/Kühl-Körpers 3 gegenüber der Vertikalen bzw. der Längsachse L der Konsole 1, 2 beträgt 30°. In gekippter Stellung kann der an den Konsolen 1, 2 verschwenkbar eingehängte Heiz/KühlKörper 3 zur Seiteneinstellung entlang der Wand nach links oder nach rechts verschoben werden. Dabei erfolgt eine Relativbewegung der Formationen F1' zu den Formationen F1 des Heiz/Kühl-Körpers.

In Fig. 10 ist der gekippte Heiz/Kühl-Körper 3 von Fig. 9 von oben gezeigt. Man erkennt die beiden Konsolen 1, 2 und die beiden Schläuche 3c, 3d an den Anschlüssen des Heiz/Kühl-Körpers 3. Ausserdem erkennt man einen Schlauch oder ein Verlängerungsrohr 10, der bzw. das als Verlängerung an den Schlauch 3d angeschlossen ist. Die Schläuche 3c, 3d und der Schlauch bzw. das Verlängerungsrohr 10 ermöglichen es, den Heiz/Kühl-Körper 3 an alle denkbaren Anschluss-"Randbedingungen" anzuschliessen. Insbesondere ermöglichen sie den Anschluss des Heiz/Kühl-Körpers 3 an linksseitige horizontale Vor- und Rückläufe, wie anhand des Vorlaufstutzens 16 und des Rücklaufstutzens 17 in Fig. 10 gezeigt, oder an rechtsseitige horizontale Vor- und Rückläufe, an einen linksseitigen Vorlauf und rechtsseitigen Rücklauf, an einen rechtsseitigen Vorlauf und linksseitigen Rücklauf, an mittige vertikale Vor- und Rückläufe unterhalb des Heiz/Kühl-Körpers 3 oder an mittige vertikale oder horizontale Vor- und Rückläufe hinter dem Heiz/KühlKörper 3. Die letztgenannte Variante zeichnet sich dadurch aus, dass die Vorlauf- und Rücklaufanschlüsse durch den Heiz/Kühl-Körper 3 verdeckt sind. In gekippter Stellung kann der Heiz/Kühl-Körper 3 nach links und rechts ausgerichtet werden.

In Fig. 11 ist ein Abschnitt des Heiz/Kühl-Körpers 3 in seiner hochgeschwenkten vertikalen Stellung gezeigt. Man erkennt den Schlauch 3d zwischen der Konsole 1 und dem Heiz/Kühl-Körper 3. Ausserdem erkennt man an der unteren/ersten Kante 3a die Leiste 5, welche an dem Haken 4 der unteren/ersten Formation F1 der Konsole 1 eingehängt und relativ zu dieser verschwenkbar ist. Ein Klemmmechanismus fixiert den Heiz/Kühl-Körper 3 im hochgeklappten Zustand zur Seite und in der Höhe.

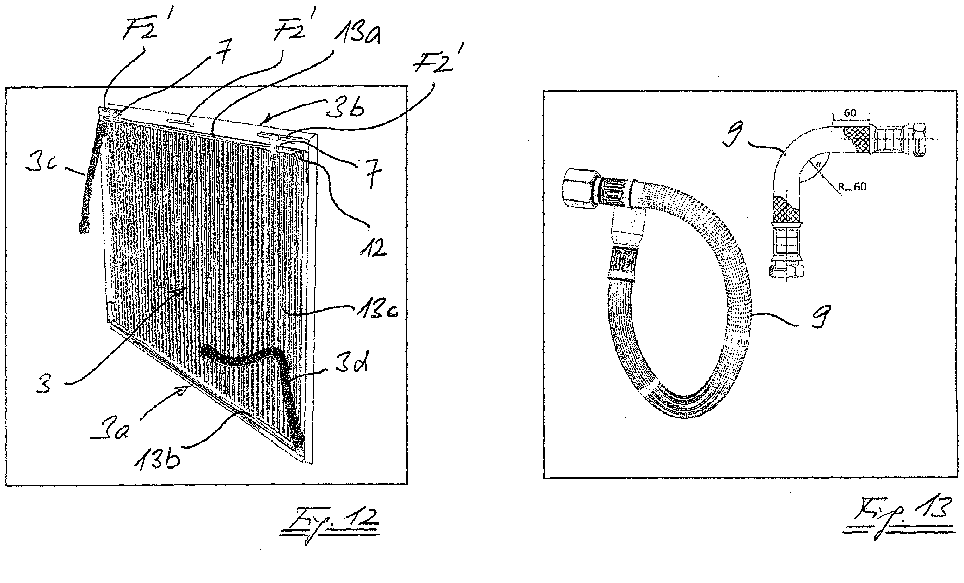

In Fig. 12 ist der in Fig. 1 gezeigte Heiz/Kühl-Körper 3 mit graphisch hervorgehobenem Vorlauf-Schlauch 3c und Rücklauf-Schlauch 3d gezeigt. Man erkennt ausserdem ein Entlüftungsventil 12 und ein Rohrregister 13, das einen wesentlichen Teil des Heiz/Kühl-Körpers 3 darstellt. Das Rohrregister 13 ist vorzugsweise aus Polymermaterial gefertigt. Es hat einen Vorlauf-Verteiler 13a, der stromab an den Vorlauf-Schlauch 3c angeschlossen ist, und einen Rücklauf-Verteiler 13b, der stromauf an den Rücklauf-Schlauch 3d angeschlossen ist. Zwischen dem Vorlauf-Verteiler 13a und dem Rücklauf-Verteiler 13b erstrecken sich viele parallel zueinander verlaufende Verbindungsrohre 13c. Sämtliche Leitungsquerschnitte des Rohrregisters, d.h. der Leitungsquerschnitt des Vorlauf-Verteilers 13a, der Leitungsquerschnitt des Rücklauf-Verteilers 13b sowie die Leitungsquerschnitte sämtlicher Verbindungsrohre 13c sind kreisförmig. Dadurch hat der Heiz/Kühl-Körper 3 eine geringe Masse, ist korrosionsbeständig und kann hohen Fluiddrücken in seinem Innern standhalten, wodurch sich dieser Heizköper auch für Hochhäuser mit zentraler Heizung/Kühlung eignet.

In Fig. 13 ist ein flexibles Rohr bzw. ein Schlauch 9 gezeigt, welcher einen Leitungsabschnitt des Vorlaufs 3c und Rücklaufs 3d des Heiz/Kühl-Körpers 3 bildet. Der minimale Biegeradius dieses Schlauches 9 beträgt 60 mm.

In Fig. 14 ist ein vor dem Bohren von Löchern in einem Schritt 1 erstelltes Bohrbild 14 an einer Wand gezeigt. Das Bohrbild 14 enthält vier Markierungen B1, B2, B3, B4, welche die Orte an der Wand zeigen, an denen Löcher zu bohren sind, sowie vier gestrichelt dargestellte geradlinige Begrenzungslinien G1, G2, G3, G4, welchen den Umriss des zu montierenden Heiz/Kühl-Körpers zeigen. Ausserdem erkennt man einen Vorlaufstutzen 16 und einen Rücklaufstutzen 17.

In Fig. 15 ist das lose Anbringen der beiden Konsolen 1, 2 in einem Schritt 2 mittels der Befestigungsmittel 8 an einer Wand W gezeigt. Man erkennt die an die Wand W in vertikaler Ausrichtung angelegten Konsolen 1, 2 mit ihren jeweiligen unteren und oberen Formationen F1 bzw. F2. Die oberen Formationen F2 der Konsolen 1, 2 haben jeweils einen scheibenförmigen Fortsatz 6. Ausserdem erkennt man den Vorlaufstutzen 16 und den Rücklaufstutzen 17. Die Konsolen werden mittels der Befestigungsmittel 8 an der Wand positioniert. Die Schrauben 82 der Befestigungsmittel 8 sind aber noch nicht angezogen, d.h. die Konsolen 1, 2 sind an der Wand W nur locker positioniert.

In Fig. 16 ist das Einstellen eines angestrebten Wandabstandes in einem Schritt 3A im unteren Bereich der Konsole 1, 2 in Form einer Schnittansicht gezeigt. Diese Ansicht entspricht der Fig. 6.

In Fig. 17 ist das Einstellen eines angestrebten Wandabstandes in einem Schritt 3B im oberen Bereich der Konsole 1, 2 in Form einer Schnittansicht gezeigt. Man erkennt den Fortsatz 6 in Form einer Kreisscheibe. Der Fortsatz 6 ist an der Konsole 1, 2 stufenlos verstellbar angeordnet. Hierfür ist der Fortsatz 6 mittels einer Schraubverbindung am zweiten, d.h. oberen Konsolenende 1b, 2b angebracht. Die Achse S der Schraubverbindung verläuft orthogonal zur Längsachse L der Konsole 1, 2 und orthogonal zur Schwenkachse R der Konsole 1, 2.

In Fig. 18 ist das Einhängen der ersten Montagehilfen H1 im unteren Bereich der Konsolen 1, 2 als Schritt 4 gezeigt. Man erkennt die beiden Konsolen 1, 2 mit den beiden angebrachten Montagehilfen H1, den Boden B sowie das an dem Rücklaufstutzen 17 angebrachte Verlängerungsrohr 10. Bei den beiden Konsolen 1, 2 handelt es sich jeweils um eine L-förmige Konsole, bei welcher der weiter oben beschriebene Haken 4 (siehe Fig. 11) am äusseren Ende des kurzen L-Schenkels der Konsole 1, 2 angebracht ist.

In Fig. 19 ist ein vergrösserter Ausschnitt von Fig. 18 in einer Seitenansicht gezeigt. Man erkennt, wie die erste Montagehilfe H1 am ersten bzw. unteren Konsolenende 1a der Konsole 1, d.h. am Ende des kurzen L-Schenkels der Konsole 1 angebracht wird. Die beiden Pfeile zeigen, dass die erste Montagehilfe H1 hierzu zunächst an das Ende des L-Schenkels herangeführt und mit diesem in Schwenkeingriff gebracht wird, und anschliessend um eine sich parallel zur ersten bzw. unteren Kante 3a des Heiz/Kühl-Körpers 3 (orthogonal zur Zeichnungsebene) erstreckende Schwenkachse gedreht wird, bis die Montagehilfe H1 an dem kurzen L-Schenkel derart einrastet, dass die obere Seite der Montagehilfe H1 eine im wesentlichen horizontale Gleitfläche bildet, auf welcher die untere Kante 3a des Heiz/Kühl-Körpers 3 in horizontaler Richtung hin und her gleiten kann.

In Fig. 20 ist das Anschliessen des Rücklaufs des Heizkörpers 3 mit Hilfe des zweiten Schlauches 3d und des Verlängerungsrohres 10 als Schritt 5 gezeigt. Die weiteren Elemente und Bezugszeichen sind dieselben wie in Fig. 18.

In Fig. 21 ist das Aufsetzen des Heiz/Kühl-Körpers 3 auf die eingehängten Montagehilfen H1 als Schritt 6A gezeigt. Der Heiz/Kühl-Körper 3 wird dabei schräg zur Vertikalen mit seiner unteren Kante 3a auf die obere Seite der jeweiligen Montagehilfe H1 derart aufgesetzt, dass die Leiste 5 zu dem Haken 4 am Ende des kurzen L-Schenkels der jeweiligen Konsole 1, 2 weist.

In Fig. 22 ist das Verschieben des auf die Montagehilfen H1 aufgesetzten Heiz/KühlKörpers 3 in horizontaler Richtung entlang der Montagehilfen H1 als Schritt 6B gezeigt. Der Heiz/Kühl-Körper 3 wird dabei auf den Montagehilfen H1 gleitend zu dem Haken 4 am Ende des kurzen L-Schenkels der jeweiligen Konsole 1, 2 geschoben, bis die Leiste 5 in dem Haken 4 in Anschlag gelangt. Der Heiz/KühlKörper 3 ist nun an den ersten bzw. unteren Enden 1a, 2a der Konsolen 1, 2 in einem Schwenkeingriff und kann um eine parallel zur unteren Kante 3a des Heiz/Kühl-Körpers 3 (orthogonal zur Zeichnungsebene) verlaufende Schwenkachse R (siehe Fig. 25 und Fig. 26) verschwenkt werden.

In Fig. 23 ist das seitliche Ausrichten des Heiz/Kühl-Körpers 3 als Schritt 7 gezeigt. Die weiteren Elemente und Bezugszeichen sind dieselben wie in Fig. 18 oder Fig. 20.

In Fig. 24 ist das Einhängen einer zweiten Montagehilfe H2 im oberen Bereich einer der beiden Konsolen 1, 2 als Schritt 8 gezeigt. Die zweite Montagehilfe H2 ist eine Sicherungsleine oder ein Zugseil, das an der zweiten Konsolenformation F2 am oberen Ende 1a der Konsole 1 und an der zweiten Kantenformation F2' an der oberen Kante 3b des Heiz/Kühl-Körpers 3 eingehängt wird und dann zwischen diesen beiden Formationen F2 und F2' durch die Schwerkraft des Heiz/Kühl-Körpers 3 gespannt wird. Die weiteren Elemente und Bezugszeichen sind dieselben wie in Fig. 18 oder Fig. 20.

In Fig. 25 ist das Anschliessen des Vorlaufs mit Hilfe des zweiten Schlauches 3d ohne Verlängerungsrohr 10 als Schritt 9 gezeigt. Die weiteren Elemente und Bezugszeichen sind dieselben wie in Fig. 18.

In Fig. 26 ist das Hochschwenken des Heiz/Kühl-Körpers 3 um die Schwenkachse R als Schritt 10 gezeigt. Dabei lockert sich das zuvor gespannte Zugseil der zweiten Montagehilfe H2. Die weiteren Elemente und Bezugszeichen sind dieselben wie in Fig. 18.

In Fig. 27 ist ein vergrösserter Ausschnitt des in Fig. 26 gezeigten Heiz/Kühl-Körpers 3 in hochgeschwenkter Stellung in einer Seitenansicht gezeigt. Man erkennt die sich horizontal erstreckende erste Montagehilfe H1 sowie den unteren Bereich des sich vertikal erstreckenden Heiz/Kühl-Körpers 3. Eine Klemmung fixiert den Heiz/KühlKörper 3 seitlich und in der Höhe.

In Fig. 28 ist der gemäss Fig. 27 in einem Schritt 11A hochgeschwenkte Heiz/KühlKörper 3 von hinten gezeigt, wobei der Heiz/Kühl-Körper 3 im oberen Bereich der Konsolen 1, 2 noch nicht verriegelt ist. Man erkennt auch den Schlauch 3c, der unmittelbar mit dem Vorlaufstutzen 16 verbunden ist, sowie den Schlauch 3d, der über das Verlängerungsrohr 10 mit dem Rücklaufstutzen 17 verbunden ist. Der jeweilige scheibenförmige Fortsatz 6 der oberen Konsolenformation F2 der beiden Konsolen 1, 2 liegt am Heiz/Kühl-Körper 3 an. Links von jedem der beiden Fortsätze 6 befindet sich ein an der oberen Kante 3b des Heiz/Kühl-Körpers 3 angeordneter und jeweils einem Fortsatz 6 zugeordneter Schlitten 7, der entlang der Längsrichtung der oberen Kante 3b verschiebbar an dem Heiz/Kühl-Körper 3 gelagert ist. Jeder der beiden Schlitten 7 kann zu dem ihm zugeordneten Fortsatz 6 hin bewegt und mit diesem in Eingriff gebracht werden. Dadurch kann der Heiz/Kühl-Körper 3 in seiner vertikalen Stellung an den beiden Konsolen 1, 2 befestigt werden.

In Fig. 29 ist einer der beiden Ausschnitte des Heiz/Kühl-Körpers 3 von Fig. 28 vor dem Verriegeln des Heiz/Kühl-Körpers 3 an den Konsolen 1, 2 gezeigt. Der an der zweiten bzw. oberen Kante 3b des Heiz/Kühl-Körpers 3 horizontal verschiebbare Schlitten 7 hat eine Aussparung 7a, die mit einem Einrastbereich 6a an dem scheibenförmigen Fortsatz 6 in Eingriff gebracht werden kann. Der Einrastbereich 6a und die zu ihm komplementär ausgebildete Aussparung 7a gelangen dabei miteinander in eine Rastverbindung.

In Fig. 30 ist der Ausschnitt des Heiz/Kühl-Körpers 3 von Fig. 28 nach dem Verriegeln des Heiz/Kühl-Körpers 3 als Schritt 11B gezeigt. Der Schieber 7 ist nun entlang der oberen Kante 3b des Heiz/Kühl-Körpers 3 zu dem Fortsatz 6 hin verschoben und mit dem Fortsatz 6 der jeweiligen Konsole 1, 2 in Eingriff, wobei der Einrastbereich 6a und die zu ihm komplementär ausgebildete Aussparung 7a miteinander in Rastverbindung sind.

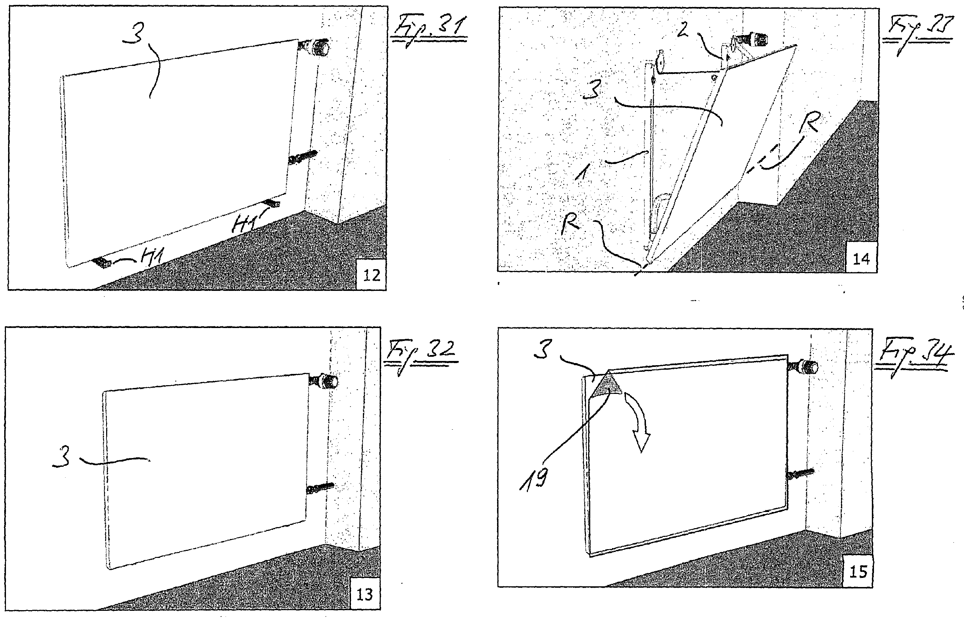

In Fig. 31 ist der montierte Heiz/Kühl-Körper 3 vor dem Entfernen der ersten Montagehilfen H1 gezeigt. In Schritt 12 werden die von der unteren Kante 3a des Heiz/Kühl-Körpers 3 hervorstehenden Montagehilfen H1 entfernt, indem die in Fig. 19 gezeigten und beschriebenen Bewegungen der Montagehilfen H1 in umgekehrter Reihenfolge durchgeführt werden.

In Fig. 32 ist der montierte Heiz/Kühl-Körper 3 nach dem Entfernen der ersten Montagehilfen H1 gezeigt. Nun können in einem Schritt 13 die Höhe bzw. der Bodenabstand sowie die Tiefe bzw. der Wandabstand kontrolliert und ggfs. nachjustiert werden.

In Fig. 33 ist das erneute Herabschwenken des Heiz/Kühl-Körpers 3 um die Schwenkachse R und das feste Anbringen der beiden Konsolen 1, 2 mittels der Befestigungsmittel 8 an der Wand als Schritt 14 gezeigt. Die Schrauben 82 der Befestigungsmittel 8 werden nun angezogen, so dass die Konsolen 1, 2 und damit der Heiz/Kühl-Körper 3 an der Wand W feststehend positioniert sind. In dieser herabgeschwenkten Stellung kann auch die Entlüftung des Heiz/Kühl-Körpers 3 über das Entlüftungsventil 12 erfolgen. Nun kann das abschliessende erneute Hochschwenken des Heiz/Kühl-Körpers 3 um die Schwenkachse R herum und das erneute Verriegeln des Heiz/Kühl-Körpers 3 an den Konsolen 1, 2 wie in Schritt 11A und 11B erfolgen.

In Fig. 34 ist das Abziehen einer auf dem Heiz/Kühl-Körper 3 angebrachten Schutzfolie 19 gezeigt. Der an der Wand montierte Heiz/Kühl-Körper 3 ist nun einsatzbereit.

## Patentansprüche

1. System zur Befestigung eines Heiz/Kühl-Körpers (3), welcher eine erste Kante (3a) und eine zu der ersten Kante gegenüberliegende zweite Kante (3b) aufweist und einen Bestandteil des System bildet, welche beide an dem Heiz/Kühl-Körper (3) fest angebracht oder mit diesem einstückig sind; wobei das System aufweist:
mindestens zwei Konsolen (1, 2) mit jeweils einer Längsachse (L), welche durch ein erstes Konsolenende (1a, 2a) und ein zweites Konsolenende (1b, 2b) der jeweiligen Konsole (1, 2) verläuft, wobei das erste Konsolenende (1a, 2a) jeweils eine erste Konsolenformation (F1) aufweist und das zweite Konsolenende (1b, 2b) jeweils eine zweite Konsolenformation (F2) aufweist; wobei
die erste Kante (3a) eine zu der ersten Konsolenformation (F1) komplementäre erste Kantenformation (F1') aufweist, welche mit der ersten Konsolenformation (F1) in Eingriff gebracht werden kann, und die zweite Kante (3b) eine zu der zweiten Konsolenformation (F2) komplementäre zweite Kantenformation (F2') aufweist, welche mit der zweiten Konsolenformation (F2) in Eingriff gebracht werden kann, wobei die erste Konsolenformation (F1) mit der komplementären ersten Kantenformation (F1') des Heiz/Kühl-Körpers (3) in einen Schwenkeingriff gebracht werden kann, so dass die Konsole (1, 2) mit ihrem ersten Konsolenende (1a, 2a) bezüglich des Heiz/Kühl-Körpers (3) innerhalb einer zur Hauptebene des Heiz/KühlKörpers (3) orthogonalen Ebene um eine Schwenkachse (R) verschwenkbar ist; und
wobei die zweite Konsolenformation (F2) mit der komplementären zweiten Kantenformation (F2') des Heiz/Kühl-Körpers (3) in einen Rasteingriff gebracht werden kann, so dass die Konsole (1, 2) mit ihrem zweiten Konsolenende (1b, 2b) an dem Heiz/Kühl-Körper (3) einrastbar ist, **dadurch gekennzeichnet, dass** die zweite Konsolenformation (F2) einen Fortsatz (6) aufweist und die zweite Kante (3b) einen an ihr entlang ihrer Längsrichtung verschiebbar gelagerten Schlitten (7) aufweist, an welchem der Fortsatz (6) eingerastet werden kann.

2. System nach Anspruch 1, **dadurch gekennzeichnet, dass** die erste Konsolenformation (F1) einen Haken (4) aufweist und die erste Kante (3a) eine Leiste (5) aufweist, an welcher der Haken (4) an einer auswählbaren Stelle entlang der Längsrichtung der Leiste (5) eingehängt und verschwenkt werden kann.

3. System nach Anspruch 1 oder 2, **dadurch gekennzeichnet, dass** der Fortsatz (6) einen plattenartigen oder scheibenartigen Einrastbereich (6a) aufweist, welcher in eine dazu komplementäre Aussparung (7a) des Schlittens (7) einführbar und darin einrastbar ist.

4. System nach einem der vorhergehenden Ansprüche, **dadurch gekennzeichnet, dass** der Fortsatz (6) an der Konsole (1, 2) stufenlos verstellbar angeordnet ist.

5. System nach Anspruch 4, **dadurch gekennzeichnet, dass** der Fortsatz (6) mittels einer Schraubverbindung am zweiten Konsolenende (1b, 2b) angebracht ist.

6. System nach Anspruch 5, **dadurch gekennzeichnet, dass** die Achse (S) der Schraubverbindung orthogonal zur Längsachse (L) der Konsole (1, 2) und orthogonal zur Schwenkachse (R) der Konsole (1, 2) verläuft.

7. System nach einem der Ansprüche 1 bis 6, **dadurch gekennzeichnet, dass** eine Konsole (1, 2) ein erstes Wand-Befestigungsmittel (8) und ein zweites Wand-Befestigungsmittel (8) aufweist, die entlang der Längsachse (L) der Konsole (1, 2) voneinander beabstandet angeordnet sind.

8. System nach einem der Ansprüche 1 bis 6, **dadurch gekennzeichnet, dass** eine Konsole (1, 2) ein Wand-Befestigungsmittel (8) an einem Ort ihrer Längsachse (L) und ein Boden-Befestigungsmittel im Bereich ihres ersten Endes (1a, 2a) aufweist.

9. Verfahren zur Befestigung eines Heiz/Kühl-Körpers (3) an einer Wand (W) oder an einem Boden (B) unter Verwendung eines Systems gemäss einem der Ansprüche 1 bis 8, wobei das Verfahren die folgenden Schritte aufweist:
a) Befestigen mindestens zweier Konsolen (1, 2) an einer Wand (W) und/oder an einem Boden (B), wobei die Längsachse (L) jeder Konsole (1, 2) vertikal ausgerichtet wird und die beiden Konsolen (1, 2) in horizontaler Richtung voneinander beabstandet angeordnet werden;
b) In-Eingriff-Bringen der ersten Kantenformation (F1') des Heiz/Kühl-Körpers (3) mit der komplementären ersten Konsolenformation (F1) der jeweiligen Konsole (1, 2), so dass ein Schwenkeingriff zwischen dem Heiz/Kühl-Körper (3) und den Konsolen (1, 2) hergestellt wird;
c) Verschwenken des Heiz/Kühl-Körpers (3) bezüglich der beiden Konsolen (1, 2) um eine Schwenkachse (R), wobei die zweite Kantenformation (F2') des Heiz/KühlKörpers (3) an die zweite Konsolenformation (F2) der jeweiligen Konsole (1, 2) herangeschwenkt wird; und
d) In-Eingriff-Bringen der zweiten Kantenformation (F2') des Heiz/Kühl-Körpers (3) mit der komplementären zweiten Konsolenformation (F2) der jeweiligen Konsole (1, 2), so dass ein Rasteingriff zwischen dem Heiz/Kühl-Körper (3) und den Konsolen (1, 2) hergestellt wird, wobei die zweite Konsolenformation (F2) einen Fortsatz (6) aufweist und die zweite Kante (3b) einen an ihr entlang ihrer Längsrichtung verschiebbar gelagerten Schlitten (7) aufweist, an welchen der Fortsatz (6) eingerastet wird.

## Claims

1. System for mounting a heating/cooling element (3) which has a first edge (3a) and a second edge (3b) opposite the first edge and forms a part of the system, with both being firmly attached to or integral with the heating/cooling element (3); wherein the system has at least two brackets (1, 2), each with a longitudinal axis (L) which runs through a first bracket end (1a, 2a) and a second bracket end (1b, 2b) of the respective bracket (1, 2), wherein the first bracket end (1a, 2a) has in each case a first bracket formation (F1) and the second bracket end (1b, 2b) has in each case a second bracket formation (F2); wherein the first edge (3a) has a first edge formation (F1') complementary to the first bracket formation (F1), which may be brought into engagement with the first bracket formation (F1), and the second edge (3b) has a second edge formation (F2') complementary to the second bracket formation (F2), which may be brought into engagement with the second bracket formation (F2), wherein the first bracket formation (F1) with the complementary first edge formation (F1') of the heating/cooling element (3) may be brought into a pivoting engagement, so that the bracket (1, 2) with its first bracket end (1a, 2a) is pivotable relative to the heating/cooling element (3) within a plane orthogonal to the main plane of the heating/cooling element (3) around a swivel axis (R) and wherein the second bracket formation (F2) with the complementary second edge formation (F2') of the heating/cooling element (3) may be brought into a snap-in engagement, so that the bracket (1, 2) with its second bracket end (1b, 2b) may be engaged with the heating/cooling element (3), **characterised in that** the second bracket formation (F2) has an extension (6) and the second edge (3b) has a slide (7) mounted on it, movable along its longitudinal direction, with which the extension (6) may be engaged.

2. System according to claim 1, **characterised in that** the first bracket formation (F1) has a hook (4) and the first edge (3a) has a rail (5), on which the hook (4) may be suspended and pivoted at a selectable point along the longitudinal direction of the rail (5).

3. System according to claim 1 or 2, **characterised in that** the extension (6) has a plate-like or disc-like snap-fitting zone (6a), which may be inserted into and engaged in a complementary recess (7a) of the slide (7).

4. System according to any of the preceding claims, **characterised in that** the extension (6) is steplessly adjustable on the bracket (1, 2).

5. System according to claim 4, **characterised in that** the extension (6) is attached by means of a screw connection to the second bracket end (1b, 2b)

6. System according to claim 5, **characterised in that** the axis (S) of the screw connection runs orthogonal to the longitudinal axis (L) of the bracket (1, 2) and orthogonal to the swivel axis (R) of the bracket (1, 2).

7. System according to any of claims 1 to 6, **characterised in that** a bracket (1, 2) has a first wall mounting means (8) and a second wall mounting means (8) which are arranged with clearance from one another along the longitudinal axis (L) of the bracket (1, 2).

8. System according to any of claims 1 to 6, **characterised in that** a bracket (1, 2) has wall mounting means (8) at a point on its longitudinal axis (L) and floor fixing means in the area of its first end (1a, 2a).

9. Method of mounting a heating/cooling element (3) on a wall (W) or a floor (B) using a system according to any of claims 1 to 8, wherein the method has the following steps:
a) fixing of at least two brackets (1, 2) to a wall (W) or a floor (B), wherein the longitudinal axis (L) of each bracket (1, 2) is aligned vertically and the two brackets (1, 2) are spaced apart from one another in the horizontal direction;
b) bringing into engagement of the first edge formation (F1') of the heating/cooling element (3) with the complementary first bracket formation (F1) of the respective bracket (1, 2), so that a pivoting engagement between the heating/cooling element (3) and the brackets (1, 2) is created;
c) swivelling of the heating/cooling element (3) relative to the two brackets (1, 2) around a swivel axis (R), wherein the second edge formation (F2') of the heating/cooling element (3) is swivelled onto the second bracket formation (F2) of the respective bracket (1, 2);
d) bringing into engagement of the second edge formation (F2') of the heating/cooling element (3) with the complementary second bracket formation (F2) of the respective bracket (1, 2), so that a snap-in engagement between the heating/cooling element (3) and the brackets (1, 2) is created, wherein the second bracket formation (F2) has an extension (6) and the second edge (3b) has a slide (7) mounted on it, movable along its longitudinal direction, with which the extension (6) is engaged.

## Revendications

1. Système servant à fixer un corps de chauffage/refroidissement (3), lequel présente une première arête (3a) et une seconde arête (3b) faisant face à la première arête, et fait partie intégrante du système, lesquelles sont toutes deux installées de manière solidaire au niveau du corps de chauffage/refroidissement (3) ou sont d'un seul tenant avec celui-ci, dans lequel le système présente :
au moins deux consoles (1, 2), avec respectivement un axe longitudinal (L), lequel s'étend à travers une première extrémité de console (1a, 2a) et une seconde extrémité de console (1b, 2b) de la console (1, 2) respective, dans lequel la première extrémité de console (1a, 2a) présente respectivement une première structure de console (F1) et la seconde extrémité de console (1b, 2b) présente respectivement une seconde structure de console (F2), dans lequel
la première arête (3a) présente une première structure d'arête (F1') complémentaire par rapport à la première structure de console (F1), laquelle peut être mise en prise avec la première structure de console (F1), et la seconde arête (3b) présente une seconde structure d'arête (F2') complémentaire par rapport à la seconde structure de console (F2), laquelle peut être mise en prise avec la seconde structure de console (F2), dans lequel la première structure de console (F1) peut être mise en prise par pivotement avec la première structure d'arête (F1') complémentaire du corps de chauffage/refroidissement (3) de sorte que la console (1, 2) peut être pivotée autour d'un axe de pivotement (R) par sa première extrémité de console (1a, 2a) par rapport au corps de chauffage/refroidissement (3) à l'intérieur d'un plan orthogonal par rapport au plan principal du corps de chauffage/refroidissement (3) ; et
dans lequel la seconde structure de console (F2) peut être mise en prise par enclenchement avec la seconde structure d'arête (F2') complémentaire du corps de chauffage/refroidissement (3) de sorte que la console (1, 2) peut être enclenchée par sa seconde extrémité de console (1b, 2b) au niveau du corps de chauffage/refroidissement (3), **caractérisé en ce que** la seconde structure de console (F2) présente un prolongement (6) et la seconde arête (3b) présente un coulisseau (7) monté de manière à pouvoir coulisser au niveau de celle-ci le long de son sens longitudinal, au niveau duquel le prolongement (6) peut être enclenché.

2. Système selon la revendication 1, **caractérisé en ce que** la première structure de console (F1) présente un crochet (4) et la première arête (3a) présente une baguette (5), au niveau de laquelle le crochet (4) peut être accroché et pivoté au niveau d'un emplacement pouvant être sélectionné le long du sens longitudinal de la baguette (5).

3. Système selon la revendication 1 ou 2, **caractérisé en ce que** le prolongement (6) présente une zone d'enclenchement (6a) de type plaque ou disque, laquelle peut être introduite dans un évidement (7a) complémentaire à celle-ci du coulisseau (7) et peut y être enclenchée.

4. Système selon l'une quelconque des revendications précédentes, **caractérisé en ce que** le prolongement (6) est disposé de manière à pouvoir être ajusté en continu au niveau de la console (1, 2).

5. Système selon la revendication 4, **caractérisé en ce que** le prolongement (6) est installé au moyen d'une liaison par vissage au niveau de la seconde extrémité de console (1b, 2b).

6. Système selon la revendication 5, **caractérisé en ce que** l'axe (S) de la liaison par vissage s'étend de manière orthogonale par rapport à l'axe longitudinal (L) de la console (1, 2) et de manière orthogonale par rapport à l'axe de pivotement (R) de la console (1, 2).

7. Système selon l'une quelconque des revendications 1 à 6, **caractérisé en ce qu'**une console (1, 2) présente un premier moyen de fixation au mur (8) et un second moyen de fixation au mur (8), qui sont disposés à distance l'un de l'autre le long de l'axe longitudinal (L) de la console (1, 2).

8. Système selon l'une quelconque des revendications 1 à 6, **caractérisé en ce qu'**une console (1, 2) présente un moyen de fixation au mur (8) au niveau d'un endroit de son axe longitudinal (L) et un moyen de fixation au sol dans la zone de sa première extrémité (1a, 2a).

9. Procédé servant à fixer un corps de chauffage/refroidissement (3) au niveau d'un mur (W) ou au niveau d'un sol (B) en utilisant un système selon l'une quelconque des revendications 1 à 8, dans lequel le procédé présente les étapes suivantes :
a) la fixation d'au moins deux consoles (1, 2) au niveau d'un mur (W) et/ou au niveau d'un sol (B), dans lequel l'axe longitudinal (L) de chaque console (1, 2) est orienté de manière verticale et les deux consoles (1, 2) sont disposées à distance l'une de l'autre dans la direction horizontale ;
b) la mise en prise de la première structure d'arête (F1') du corps de chauffage/refroidissement (3) avec la première structure de console (F1) complémentaire de la console (1, 2) respective de sorte qu'une prise par pivotement entre le corps de chauffage/refroidissement (3) et les consoles (1, 2) est établie ;
c) le pivotement du corps de chauffage/refroidissement (3) par rapport aux deux consoles (1, 2) autour d'un axe de pivotement (R), dans lequel la seconde structure d'arête (F2') du corps de chauffage/refroidissement (3) est rapprochée par pivotement de la seconde structure de console (F2) de la console (1, 2) respective ; et
d) la mise en prise de la seconde structure d'arête (F2') du corps de chauffage/refroidissement (3) avec la seconde structure de console (F2) complémentaire de la console (1, 2) respective de sorte qu'une prise par enclenchement entre le corps de chauffage/refroidissement (3) et les consoles (1, 2) est établie, dans lequel la seconde structure de console (F2) présente un prolongement (6) et la seconde arête (3b) présente un coulisseau (7) monté de manière à pouvoir coulisser au niveau de celle-ci le long de son sens longitudinal, au niveau duquel le prolongement (6) est enclenché.
